# EUROPEAN PATENT SPECIFICATION

(11) **EP 4 206 355 B1**
(45) Date of publication and mention of the grant of the patent: **18.11.2026**
(21) Application number: 21860561.6
(22) Date of filing: 30.08.2021
(51) Int. Cl.: C22C 38/02, C22C 38/04, C22C 38/06, C22C 38/12, C22C 38/14, C22C 38/00, C22C 38/08, C22C 38/38, C22C 38/34, C22C 38/22, C22C 38/28, C22C 38/58, C22C 38/44, C22C 38/50, C21D 9/46, C21D 8/02, C21D 6/00, C21D 1/19, C21D 1/60, C21D 1/84, C21D 1/02

(54) **980 MPA-GRADE ULTRA-LOW-CARBON MARTENSITE AND RETAINED AUSTENITE ULTRA-HIGH HOLE EXPANSION STEEL AND MANUFACTURING METHOD THEREFOR**
980 ULTRAHOCHLOCHEXPANSIONSSTAHL MIT EXTREM NIEDRIGEM KOHLENSTOFFGEHALT UND FIXIERTEM AUSTENIT-STAHL MIT ULTRAHOHER LOCHAUSDEHNUNG UND HERSTELLUNGSVERFAHREN DAFÜR
ACIER À EXPANSION DE TROU ULTRA-ÉLEVÉE, À MARTENSITE À TRÈS FAIBLE TENEUR EN CARBONE ET À AUSTÉNITE RÉSIDUELLE DE QUALITÉ 980 MPA, ET SON PROCÉDÉ DE FABRICATION

(30) Priority: 31.08.2020 CN 202010896487
(43) Date of publication of application: 05.07.2023
(73) Proprietor: BAOSHAN IRON & STEEL CO., LTD., Shanghai 201900 (CN)
(72) Inventor: WANG, Huanrong, Shanghai 201900 (CN); ZHANG, Chen, Shanghai 201900 (CN); YANG, Feng, Shanghai 201900 (CN); YANG, Ana, Shanghai 201900 (CN)
(74) Representative: Kuhnen & Wacker Patent- und Rechtsanwaltsbüro PartG mbB
(86) International application number: PCT/CN2021/115426
(87) International publication number: WO 2022/042729

(56) References cited:
- EP-A1- 1 096 029
- CN-A- 103 857 820
- CN-A- 103 924 155
- CN-A- 106 119 702
- CN-A- 107 580 634
- CN-A- 108 350 546
- CN-A- 109 023 036
- JP-A- 2015 101 781
- JP-A- 2015 196 843
- KR-A- 20120 121 811
- US-A1- 2003 005 986
- US-A1- 2015 329 950
- US-A1- 2016 273 066
- US-A1- 2017 275 719
- US-A1- 2019 211 413

## Description

### Technical Field

The present invention pertains to the field of high-strength steel coil or plate, steel and in particular relates to a 980 MPa-grade ultra-low-carbon martensitic-retained austenitic ultra-high-hole-expandability steel coil or plate, and a manufacturing method for said steel plate.

### Background Art

Along with the development of the national economy, the production of automobiles has increased significantly, and the consumption of plates has also continued to increase. In the domestic automobile industry, the use of hot-rolled or pickled plates is required by the early design of components and parts of many types of vehicles, such as chassis parts, torsion beams, car sub-frames, wheel spokes and rims, front and rear axle assemblies, body structural parts, seats, clutches, seat belts, truck box panels, protective nets, automotive beams and other spare parts. Chassis steel accounts for 24-34% of the total steel consumption of a car.

Weight reduction of passenger vehicles is not only a development trend in the automotive industry, but also a requirement of the laws and regulations. Fuel consumption per hundred kilometers is restricted by the laws and regulations. This is actually a disguised requirement to reduce the weight of the vehicle body, and in turn, the materials are required to have higher strength, smaller thickness and lower weight. Higher strength and lower weight will certainly be requirements of new model vehicles in the future. This will inevitably lead to use of steel of higher grades, and also change in chassis structure. For example, parts will be more complex. As such, improvements are necessary in the performances and surface quality of materials, as well as forming technologies, such as hydroforming, hot stamping, laser welding, etc. In turn, the strength, stamping performance, flanging performance, resilience, fatigue resistance and other performances of the materials need to be improved.

The high-strength and high-hole-expandability steel developed in China not only has relatively low strength compared with that developed in foreign countries, but also has poor performance stability. For example, the high-hole-expandability steel used by domestic auto parts companies is basically high-strength steel having a tensile strength of 600 MPa or less, and the competition in the market of high-hole-expandability steel of the 440 MPa grade or lower is red hot. Nowadays, the high-hole-expandability steel having a tensile strength of 780 MPa starts to be used gradually on a large scale. However, high requirements are also imposed on two important indicators in the forming process, namely elongation and hole expansion ratio. Unfortunately, 980 MPa-grade high-hole-expandability steel is still in the stage of R&D and validation, and has not yet reached the stage of mass use. However, the 980 MPa-grade high-hole-expandability steel having higher strength and higher hole expansion ratio is an inevitable development trend in the future. In order to better meet the potential needs of users in the future, it is necessary to develop a 980 MPa-grade high-hole-expandability steel having good hole expandability.

So far, most of the relevant patent documents are directed to high-hole-expandability steel of the 780 MPa grade and lower. There are very few literatures related to 980 MPa-grade high-hole-expandability steel. Chinese Patent Publication CN106119702A discloses a 980 MPa-grade hot-rolled high-hole-expandability steel. The main characteristic of the design of its composition is an ultra-low-carbon V-Ti microalloying design. Its microstructure is granular bainite and a small amount of martensite. At the same time, trace amounts of Nb and Cr are added.

As it can be seen from the literatures, the elongation of a material is generally inversely proportional to the hole expansion ratio. That is, the higher the elongation, the lower the hole expansion ratio; conversely, the lower the elongation, the higher the hole expansion ratio. Hence, it is very difficult to obtain a high-hole-expandability steel having high elongation and high hole expandability on the one hand, and high strength on the other hand.

In addition, under the same or similar strengthening mechanism, the higher the strength of the material, the lower the hole expansion ratio. In order to obtain a steel having both good plasticity and good hole expandability/flanging ability, a better balance between them is required. Of course, the hole expansion ratio of a material is closely related with many factors, among which the most important factors include the uniformity of the structure, the level at which inclusions and segregation are controlled, different structure types, the measurement of the hole expansion ratio, and the like. Generally speaking, a single uniform structure is beneficial to obtain a higher hole expansion ratio, while a dual-phase or multiphase structure is usually not beneficial to increase the hole expansion ratio.

US 2016/273066 A1 provides a hot-rolled steel sheet in which a composition contains: in mass %, C: 0.01% to 0.2%; Si: 2.5% or less; Mn: 4.0% or less; P: 0.10% or less; S: 0.03% or less; Al: 0.001% to 2.0%; N: 0.01% or less; O: 0.01% or less; Ti: 0.01 to 0.30%; and the balance being composed of iron and impurities and a structure is composed of by volume fraction, 90% or more of tempered martensite with an average aspect ratio of 2 or less, or 90% or more in total of both tempered martensite and lower bainite.

### Summary

One object of the present invention is to provide a 980 MPa-grade ultra-low-carbon martensitic-retained austenitic ultra-high-hole-expandability steel coil or plate, and a manufacturing method for said steel plate. The high-hole-expandability steel has a yield strength of ≥800 MPa, and a tensile strength of ≥980 MPa. The high-strength and high-hole-expandability steel can be used for some parts of a chassis of a passenger vehicle, such as a control arm and a sub-frame, which require higher strength and smaller thickness.

To achieve the above object, the technical solution of the present invention is defined in claims 1 and 13. Further improvements are subject to the dependent claims.

In the compositional design according to the present invention, a relatively low C content is employed to ensure that the steel has excellent weldability during use, and ensure that the ultra-low-carbon martensite structure obtained has good hole expandability and impact toughness. On the premise that the tensile strength of ≥ 980MPa is satisfied, the carbon content should be as low as possible. A higher Si content is designed to cooperate with the process to obtain more retained austenite, thereby improving the plasticity of the material. At the same time, a higher Si content helps to reduce the sub-recrystallization temperature of the steel, so that the steel can accomplish the dynamic recrystallization process at a lower final rolling temperature, thereby refining the austenite grains and the final martensite grains, and improving the plasticity and hole expansion ratio.

In the compositional design of the 980 MPa-grade ultra-low-carbon martensitic-retained austenitic ultra-high-hole-expandability steel coil or plate according to the present invention:
Carbon: Carbon is an essential element in the steel, and it's also one of the important elements in the present invention. Carbon enlarges an austenite phase region and stabilizes austenite. As an interstitial atom in the steel, carbon plays an important role for increasing steel strength, and has the greatest influence on the yield strength and tensile strength of the steel. According to the present invention, the desired structure is ultra-low-carbon martensite. In order to obtain a high-strength steel having a tensile strength of the 980 MPa grade, it is necessary to ensure that the carbon content is 0.03% or higher. Otherwise, if the carbon content is below 0.03%, even if the steel is fully quenched to room temperature, the tensile strength still cannot reach 980 MPa. However, the carbon content should not be higher than 0.06%. If the carbon content is too high, the strength of the ultra-low-carbon martensite formed will be too high, and thus both the elongation and hole expansion ratio will be low. Therefore, the carbon content should be controlled at 0.03-0.06%, preferably at 0.04-0.055%.

Silicon: Silicon is an essential element in the steel, and it's also one of the important elements in present invention. In addition to increasing the solid solution strengthening effect, an increased Si content has the following two more important functions. The first important function is to reduce the sub-recrystallization temperature of the steel greatly, so that the steel can accomplish dynamic recrystallization at very low temperatures. As such, in the practical rolling process, rolling can be carried out at a relatively low final rolling temperature, such as rolling at a final rolling temperature in the range of 800-850 °C. This can greatly reduce the grain size of austenite, thereby reducing the size of the final martensitic lath, which is not only conducive to improving the strength and plasticity, but also conducive to acquiring good hole expansion ratio. The second important role of Si is to inhibit precipitation of cementite. Under appropriate rolling process conditions, especially when a structure dominated by martensite is obtained, a certain amount of retained austenite may be left over. This is beneficial to increase the elongation. It's well known that martensite has the lowest elongation at the same strength level. In order to increase the elongation of martensite, one of the important measures is to keep a certain amount of stable retained austenite. This function of Si is manifested only when its content reaches 0.8% or higher. However, the content of Si should not be too high; otherwise, the rolling load will be too large in the practical rolling process, which is not conducive to stable production of products. Therefore, the Si content in the steel is controlled at 0.8-2.0%, preferably 1.2-1.6%.

Manganese: Manganese is the most essential element in the steel, and it's also one of the most important elements in the present invention. It's well known that Mn is an important element for enlarging the austenite phase region, and it can reduce the critical quenching rate of steel, stabilize austenite, refine grains, and delay transformation of austenite to pearlite. According to the present invention, in order to guarantee the strength of the steel plate and stabilize retained austenite as well, the Mn content is controlled at 1.0% or higher. At the same time, the Mn content should not exceed 2.0%; otherwise, Mn segregation will occur easily during steelmaking, and hot cracking is also prone to occur during continuous casting of the slab. Therefore, the content of Mn in the steel is controlled at 1.0-2.0%, preferably 1.4-1.8%.

Phosphorus: Phosphorus is an impurity element in the steel. P has a strong propensity to segregate to grain boundaries. When the P content in the steel is relatively high (≥0.1%), Fe₂P will form and precipitate around the grains, leading to decreased plasticity and toughness of the steel. Therefore, its content should be as low as possible. It's desirable to control its content within 0.02%, so that the steelmaking cost will not be increased.

Sulfur: Sulfur is an impurity element in the steel. S in the steel often combines with Mn to form MnS inclusions. Particularly, when the contents of both S and Mn are relatively high, a large amount of MnS will form in the steel. MnS has certain plasticity itself, and it will deform in the rolling direction in a subsequent rolling process, so that not only the transverse plasticity of the steel will be degraded, but also the anisotropy of the structure will be increased, which is unfavorable to the hole expandability. Therefore, the S content in the steel should be as low as possible. Considering that the Mn content in the present invention must be at a higher level, in order to reduce the MnS content, the S content should be strictly controlled. It's required to control the S content within 0.003%, preferably at 0.0015% or less.

Aluminum: The main role of aluminum in the steel is deoxygenation and nitrogen fixation. In the presence of strong carbide-forming elements such as Ti, Nb, V and the like, the main function of Al is deoxygenation and grain refinement. According to the present invention, the content of Al as a common element for deoxygenation and grain refinement is controlled at 0.02-0.08%. If the Al content is lower than 0.02%, it cannot achieve the grain refinement effect; if the Al content is higher than 0.08%, the grain refinement effect comes to a plateau. Therefore, the content of Al in the steel is controlled at 0.02-0.08%, preferably 0.02-0.05%.

Nitrogen: Nitrogen is an impurity element in the present invention, and its content should be as low as possible. However, nitrogen is an unavoidable element in the steelmaking process. Although its content is low, it can combine with strong carbide-forming elements such as Ti to form TiN particles which have a very adverse influence on the performances of the steel, especially unfavorable to the hole expandability. Due to the square shape of TiN, a large stress concentration exists between its sharp corner and the matrix. During the process of hole expansion deformation, the stress concentration between TiN and the matrix is prone to cause cracking which greatly reduces the hole expandability of the material. Provided that the nitrogen content is controlled at one's best, the contents of strong carbide-forming elements such as Ti should be as low as possible. According to the present invention, a trace amount of Ti is added to fix nitrogen, so as to minimize the adverse influence of TiN. Therefore, the nitrogen content should be controlled at 0.004% or lower, preferably 0.003% or lower.

Titanium: Titanium is one of the important elements in the present invention. Ti has primarily two functions in the present invention. One is to combine with the impurity element N in the steel to form TiN, so as to play a part in "nitrogen fixation"; and the other one is to form a certain amount of dispersed fine TiN in a subsequent process of welding the material, thereby suppressing the austenite grain size, refining the structure and improving the low temperature toughness. Therefore, the content of Ti in the steel is controlled at 0.01-0.05%, preferably in the range of 0.01-0.03%.

Molybdenum: Molybdenum is one of the important elements in the present invention. The addition of molybdenum to the steel can greatly delay the phase transformation of ferrite and pearlite. This effect of molybdenum allows for adjustment of various procedures in the practical rolling process. For example, after the final rolling is completed, staged cooling may be conducted, or air cooling and water cooling may be conducted in sequence. In the present invention, the process of air cooling and water cooling in sequence or direct water cooling after rolling is adopted. The addition of molybdenum can ensure that a structure of ferrite or pearlite will not be formed during the air cooling. At the same time, dynamic restoration of the deformed austenite can occur during the air cooling. This helps to improve the structure uniformity. In addition, molybdenum is highly resistant to welding softening. Since the main purpose of the present invention is to obtain a single structure of ultra-low-carbon martensite with a small amount of retained austenite, and ultra-low-carbon martensite tends to soften after welding, the addition of a certain amount of molybdenum can effectively reduce the degree of welding softening. Therefore, the molybdenum content should be controlled at 0.1-0.5%, preferably 0.15-0.35%.

Chromium: Chromium is an optional element in the present invention. The addition of a small amount of chromium is not aimed to improve the hardenability of the steel, but to combine with B, which is conducive to formation of an acicular ferrite structure in the welding heat affected zone after welding, thereby greatly improving the low temperature toughness of the welding heat affected zone. Because the steel according to the present invention is finally used for parts which are products such as passenger vehicle chassis, the low-temperature toughness of the welding heat affected zone is a very important indicator. In addition to ensuring that the strength of the welding heat affected zone cannot be reduced too much, the low-temperature toughness of the welding heat affected zone must also meet certain requirements. Additionally, chromium itself also exhibits some resistance to welding softening. Therefore, the amount of chromium added to the steel is ≤0.5%, preferably in the range of 0.2-0.4%.

Boron: Boron is an optional element in the present invention. The main function of boron in the steel is to inhibit formation of proeutectoid ferrite by segregating at the prior austenite grain boundaries. The addition of boron to the steel can also greatly improve the hardenability of the steel. However, according to the present invention, the main purpose of adding a trace amount of boron is not to improve the hardenability, but to combine with chromium to improve the structure of the welding heat affected zone, and obtain an acicular ferrite structure having good toughness. The addition of element boron to the steel is controlled in an amount of 0.002% or lower, preferably in the range of 0.0005-0.0015%.

Calcium: Calcium is an optional element in the present invention. Calcium can improve the shape of sulfides such as MnS. For example, the long strip-shaped MnS and other sulfides are converted to spherical CaS. This helps to improve the shape of inclusions, thereby reducing the adverse influence of long strip-shaped sulfides on hole expandability. However, the addition of calcium in an excessive amount will increase the amount of calcium oxide which is unfavorable for hole expandability. Therefore, the amount of calcium added to the steel is ≤0.005%, preferably ≤0.002%.

Oxygen: Oxygen is an unavoidable element in steel making. For the present invention, the O content in the steel is 30 ppm or lower after deoxygenation, and thus there will be no obvious adverse influence on the performances of the steel plate. Therefore, the content of O in the steel is controlled within 30 ppm.

Niobium: Niobium is one of the optional elements in the present invention. Like titanium, niobium is a strong carbide-forming element in the steel. The addition of niobium to the steel can greatly increase the sub-recrystallization temperature of the steel, help to obtain deformed austenite having a higher dislocation density in the finishing rolling stage, and refine the final phase transformation structure in the subsequent transformation process. However, the addition of too much niobium is undesirable. On the one hand, if the amount of niobium added exceeds 0.06%, it is easy to form relatively coarse niobium carbonitrides in the structure, which consumes some carbon atoms and thus reduces the precipitation strengthening effect of carbides. On the other hand, a high content of niobium further tends to cause anisotropy of the hot-rolled austenite structure. This anisotropy will be passed down to the final structure during the subsequent cooling phase transformation process, which is unfavorable for hole expandability. Therefore, the niobium content in the steel is controlled at ≤0.06%, preferably ≤0.03%.

Vanadium: Vanadium is an optional element in the present invention. Like titanium and niobium, vanadium is also a strong carbide-forming element. However, the solid solution or precipitation temperature of vanadium carbides is low, and they are all dissolved in austenite at the finishing rolling stage. Vanadium carbides begin to form in ferrite only when the temperature is decreased and phase transformation begins. Since the solid solubility of vanadium carbides in ferrite is greater than those of niobium and titanium carbides, vanadium carbides formed in ferrite have a larger size which is not conducive to precipitation strengthening. Hence, vanadium carbides contribute far less to the steel strength than titanium. In addition, the formation of vanadium carbides also consumes a certain amount of carbon atoms. This is unfavorable for improving the steel strength. Therefore, the amount of vanadium added to the steel is ≤0.05%, preferably ≤0.03%.

Copper: Copper is an optional element in the present invention. The addition of copper to the steel can improve the corrosion resistance of the steel. When it is added together with element P, the effect of corrosion resistance is better. When Cu is added in an amount of greater than 1%, an ε-Cu precipitate phase may form under certain conditions. This precipitate phase has a relatively strong precipitation strengthening effect. However, the addition of Cu tends to cause the phenomenon of "Cu embrittlement" in the rolling process. In order to make full use of the effect of copper in improving corrosion resistance without causing obvious phenomenon of "Cu embrittlement" in some application scenarios, the content of element Cu is controlled within 0.5%, preferably within 0.3%.

Nickel: Nickel is an optional element in the present invention. The addition of nickel to the steel imparts certain corrosion resistance, but the effect of corrosion resistance is weaker than that of copper. The addition of nickel to the steel has little influence on the tensile performance of the steel, but it can refine the structure and precipitate phase of the steel, thereby greatly improving the low temperature toughness of the steel. At the same time, the addition of a small amount of nickel to the steel with copper added can inhibit the occurrence of "Cu embrittlement". The addition of a relatively higher amount of nickel has no obvious adverse influence on the performances of the steel itself. Concurrent addition of copper and nickel can not only improve the corrosion resistance, but also refine the structure and precipitate phase of the steel, thereby greatly improving the low temperature toughness. However, because copper and nickel are relatively expensive alloying elements, in order to minimize the cost of alloy elements, the amount of nickel added is ≤0.5%, preferably ≤0.3%.

The innovative points of the present invention include:
In terms of the compositional design according to the present invention, the design concept is based on ultra-low-carbon martensite and the addition of a relatively high amount of silicon to suppress and reduce formation of cementite. At the same time, the addition of a relatively high amount of silicon can also help to decrease the sub-recrystallization temperature, so that the deformed austenite can accomplish the dynamic recrystallization process during the conventional finishing rolling in the austenite region. This is conducive to obtaining austenite grains having less difference between transverse and longitudinal performances. Therefore, in the subsequent cooling transformation process, a uniform structure of martensite and retained austenite is obtained. The relatively high content of manganese in the designed composition can stabilize austenite, while molybdenum significantly delays phase transformation of ferrite and pearlite. Martensite endows the steel plate with high strength; retained austenite endows the steel plate with relatively high plasticity and cold bending performance; and the uniform and fine structure endows the steel plate with higher hole expandability and excellent low-temperature impact toughness.

In terms of the design of the rolling process, at the rough rolling stage and the finishing rolling stage, the rolling procedure shall be completed as quickly as possible. After the final rolling is completed, air cooling is carried out for a certain period of time first. The main purpose of air cooling is explained as follows: the designed composition comprises relatively high contents of manganese and molybdenum. Manganese is an element that stabilizes austenite, while molybdenum significantly delays phase transformation of ferrite and pearlite. Therefore, during the air cooling for a certain period of time, the deformed austenite in the rolled steel will not undergo phase transformation. That is, no ferrite structure will be formed. Instead, dynamic recrystallization and relaxation will occur. The dynamic recrystallization of the deformed austenite allows for formation of quasi-equiaxed austenite having a uniform structure, and the dislocations in the relaxed austenite grains will be reduced notably. The combination of these two aspects enables obtainment of martensite having a uniform structure in the subsequent water hardening process. In order to obtain the martensite structure, the water cooling rate should be greater than the critical cooling rate of ultra-low-carbon martensite. In the present invention, the critical cooling rate of martensite is 30-50 °C/s, depending on the composition and process. In order to ensure that all compositions in conformity with the design can provide martensite, the rate for water cooling the strip steel is required to be ≥50°C/s.

Since the microstructure involved in the present invention is ultra-low-carbon martensite, after the final rolling is completed, the steel strip only needs to be cooled to the martensite start temperature Ms or a lower temperature at a cooling rate greater than the critical cooling rate. The content of retained austenite at room temperature varies as a function of the cooling stop temperature. Generally, there is an optimal range of quenching stop temperature, which varies as a function of the alloy composition, in the range of 150-350 °C. In order to obtain a high-strength steel having both good plasticity and hole expansion ratio, it is necessary to quench the strip steel to a temperature that is not higher than the Ms point. According to theoretical calculations and as verified by practical tests, when the strip steel is quenched to a temperature ≤ Ms, a structure having excellent comprehensive performances can be obtained. If the quenching temperature is ≥ Ms, although the amount of retained austenite is large, bainite will appear in the structure, so that the required strength of 980 MPa or higher cannot be achieved. For the above reasons, the coiling temperature needs to be controlled at ≤ Ms. It is based on this innovative concept in the design of the composition and process that the 980 MPa-grade ultra-high-hole-expandability steel having excellent strength, plasticity, toughness, cold bending performance and hole expandability according to the present invention is obtained.

The beneficial effects of the present invention include:
A 980 MPa-grade high-hole-expandability steel coil or plate having excellent strength, plasticity, toughness, cold bending performance and hole expandability can be obtained by adopting the design concept of a relatively economical composition and adopting the innovative cooling process according to the present invention.

The 980 MPa-grade steel coil or steel plate according to the present invention exhibits excellent matching of strength, plasticity, and toughness, and also has good cold bending performance and hole expandability/flanging ability. It has a yield strength of ≥800 MPa, and a tensile strength of ≥980 MPa. The hot-rolled or pickled high-hole-expandability steel having a thickness of 2-6 mm has good elongation (transverse A₅₀≥10%) and hole expandability (hole expansion ratio≥80%) at the same time, and it has passed cold bending test (d ≤4a, 180°), useful for manufacturing parts such as automobile chassis, sub-frames and the like that require high strength, reduced thickness, hole expansion and flanging, and has a very broad application prospect.

### Description of the Drawings

Fig. 1 is a process flow chart of the method for manufacturing a 980 MPa-grade ultra-low-carbon martensitic-retained austenitic ultra-high-hole-expandability steel according to the present invention;
Fig. 2 is a schematic view showing the rolling process in the method for manufacturing a 980 MPa-grade ultra-low-carbon martensitic-retained austenitic ultra-high-hole-expandability steel according to the present invention;
Fig. 3 is a schematic view showing the cooling process in the method for manufacturing a 980 MPa-grade ultra-low-carbon martensitic-retained austenitic ultra-high-hole-expandability steel according to the present invention.

### Detailed Description

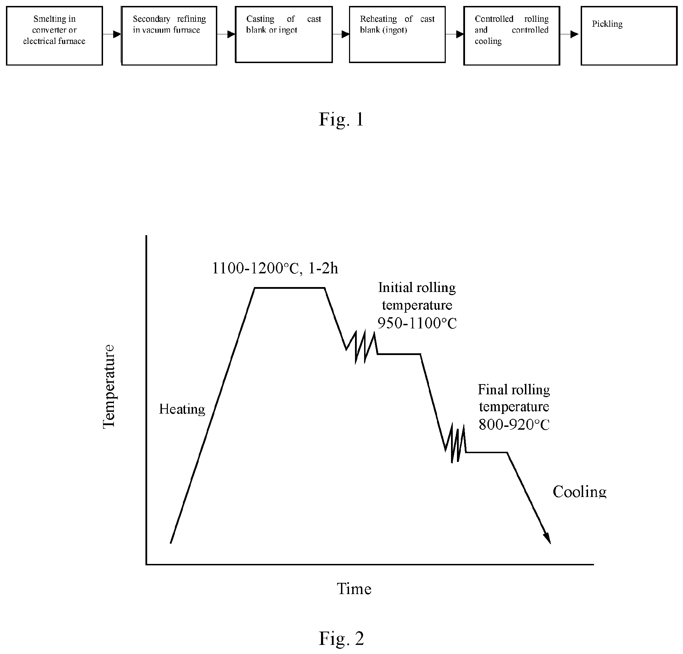

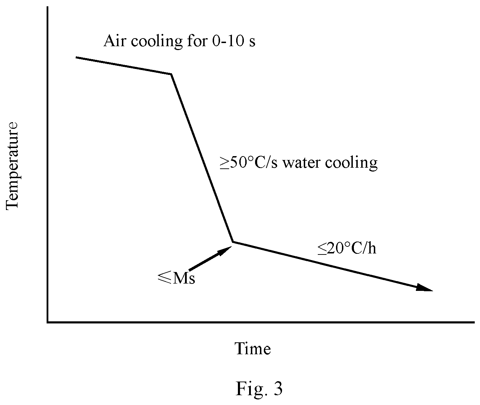

Referring to Fig. 1-Fig. 3, the method for manufacturing the 980 MPa-grade ultra-low-carbon martensitic-retained austenitic ultra-high-hole-expandability steel according to the present invention comprises the following steps:
1) Smelting, casting
   wherein the above components are subjected to smelting in a converter or electrical furnace, secondary refining in a vacuum furnace, and casting to form a cast blank or ingot;
2) Reheating of the cast blank or ingot, wherein a heating temperature is 1100-1200 °C; and a holding time is 1-2 hours;
3) Hot rolling
   wherein an initial rolling temperature is 950-1100°C; wherein 3-5 passes of heavy reduction rolling is performed at a temperature of 950°C or higher with an accumulated deformation rate of ≥50% to obtain an intermediate blank: wherein the intermediate blank is held till 900-950°C, and then subjected to final 3-5 passes of rolling with an accumulated deformation rate of ≥70%, wherein a final rolling temperature is 800-920°C;
4) Cooling
   wherein air cooling is performed for 0-10 s first, and then the strip steel is water cooled at a cooling rate of ≥50°C/s to a martensite start temperature Ms or a lower temperature, and then coiled and cooled (cooling rate ≤20°C/h) to room temperature;
5) Pickling
   wherein a moving speed of the strip steel is adjusted within a range of 30-100 m/min during pickling; a pickling temperature is controlled at 75-85°C, and a tension leveling rate is controlled at ≤2%; wherein the strip steel is then subjected to rinsing at a temperature in a range of 35-50°C, surface drying at a temperature in a range of 120-140°C, and oiling.

The compositions of the Examples of the high-hole-expandability steel according to the present invention are shown in Table 1. The production process parameters for the Examples of the steel according to the present invention are listed in Table 2 and Table 3, wherein the thickness of the steel blank in the rolling process is 120 mm. The mechanical performances of the Examples of the steel plates according to the present invention are listed in Table 4. The tensile performances (yield strength, tensile strength, elongation) were tested in accordance with International Standard ISO6892-2-2018; the hole expansion ratio was tested in accordance with International Standard ISO16630-2017; and the impact toughness at -40°C was tested in accordance with International Standard ISO14556-2015. The bending performance was tested in accordance with International Standard ISO7438-2005.

As it can be seen from Table 4, the yield strength of the steel coil is ≥800 MPa, while the tensile strength is ≥980 MPa, and the elongation is in the range of 10-13%. The impact energy is relatively stable. The low-temperature impact energy at -40°C is stabilized in the range of 140-180 J. The content of retained austenite varies as a function of the coiling temperature, by 2-5%. The hole expansion ratio satisfies ≥80%.

As it can be seen from the above Examples, the 980 MPa high-strength steel plate according to the present invention exhibits good matching of strength, plasticity, toughness and hole expandability. It is especially suitable for parts that require high strength, reduced thickness, hole expansion and flanging forming, such as a control arm in an automobile chassis structure. It can also be used for parts such as wheels that need hole-flanging. Therefore, it has broad application prospects.

**Table 1 (unit; weight%)**

| Ex. | C | Si | Mn | P | S | Al | N | Mo | Ti | Cr | B | Ca | Nb | V | Cu | Ni | O |
|---|---|---|---|---|---|---|---|---|---|---|---|---|---|---|---|---|---|
| 1 | 0.060 | 1.98 | 1.76 | 0.0011 | 0.0028 | 0.066 | 0.0030 | 0.10 | 0.029 | 0.23 | 0.0011 | / | 0.030 | / | / | 0.40 | 0.0027 |
| 2 | 0.030 | 1.77 | 1.59 | 0.0013 | 0.0029 | 0.047 | 0.0027 | 0.17 | 0.025 | 0.35 | / | 0.001 | / | 0.015 | / | / | 0.0020 |
| 3 | 0.048 | 0.80 | 1.68 | 0.0016 | 0.0010 | 0.020 | 0.0028 | 0.49 | 0.050 | 0.50 | 0.0009 | / | 0.015 | / | / | 0.50 | 0.0025 |
| 4 | 0.055 | 1.26 | 1.99 | 0.0014 | 0.0024 | 0.039 | 0.0029 | 0.29 | 0.014 | 0.30 | 0.0010 | 0.002 | | / | 0.50 | / | 0.0029 |
| 5 | 0.042 | 1.18 | 1.88 | 0.0010 | 0.0028 | 0.065 | 0.0038 | 0.38 | 0.028 | 0.28 | 0.0012 | / | 0.060 | 0.010 | / | / | 0.0024 |
| 6 | 0.057 | 1.89 | 1.02 | 0.0015 | 0.0022 | 0.054 | 0.0033 | 0.33 | 0.015 | 0.10 | 0.0013 | 0.005 | / | 0.030 | / | 0.10 | 0.0028 |
| 7 | 0.053 | 1.53 | 1.96 | 0.0014 | 0.0017 | 0.079 | 0.0035 | 0.43 | 0.010 | 0.33 | 0.0020 | / | / | / | 0.15 | / | 0.0021 |
| 8 | 0.041 | 1.64 | 1.73 | 0.0012 | 0.0025 | 0.036 | 0.0022 | 0.18 | 0.020 | / | 0.0019 | 0.003 | / | 0.050 | 0.30 | 0.30 | 0.0030 |

**Table 2**

| | Heating Temperature °C | Holding time h | Initial rolling temperature °C | Accumulated deformation rate during rough rolling % | Intermediate blank temperature °C | Accumulated deformation rate during finishing rolling % | Final rolling temperature °C | Air cooling time s | Water cooling rate °C/s | Steel plate thickness mm | Coiling temperature °C |
|---|---|---|---|---|---|---|---|---|---|---|---|
| Ex. 1 | 1170 | 1.3 | 1040 | 70 | 950 | 89 | 880 | 5 | 60 | 6 | 390 |
| Ex. 2 | 1160 | 1.4 | 1090 | 50 | 900 | 92 | 820 | 9 | 50 | 5 | 125 |
| Ex. 3 | 1190 | 1.0 | 1100 | 65 | 930 | 90 | 900 | 4 | 55 | 3 | 280 |
| Ex. 4 | 1130 | 1.7 | 960 | 55 | 910 | 94 | 820 | 7 | 70 | 4 | 250 |
| Ex. 5 | 1150 | 1.5 | 1020 | 60 | 940 | 88 | 850 | 10 | 65 | 4 | r.t. |
| Ex. 6 | 1120 | 2.0 | 1000 | 75 | 920 | 93 | 810 | 6 | 80 | 2 | 180 |
| Ex. 7 | 1140 | 1.8 | 980 | 80 | 930 | 90 | 920 | 0 | 75 | 3 | 230 |
| Ex. 8 | 1180 | 1.2 | 1050 | 70 | 925 | 91 | 830 | 8 | 85 | 2 | 150 |

**Table 3**

| | Moving speed of strip steel during pickling m/min | Pickling temperature °C | Tension leveling rate % | Rinsing temperature °C | Drying temperature °C |
|---|---|---|---|---|---|
| Ex. 1 | 90 | 76 | 1.2 | 40 | 128 |
| Ex. 2 | 45 | 83 | 2.0 | 35 | 140 |
| Ex. 3 | 60 | 75 | 0.6 | 48 | 133 |
| Ex. 4 | 100 | 79 | 1.4 | 36 | 130 |
| Ex. 5 | 40 | 82 | 1.8 | 45 | 125 |
| Ex. 6 | 50 | 85 | 0.8 | 50 | 136 |
| Ex. 7 | 30 | 78 | 1.6 | 42 | 120 |
| Ex. 8 | 80 | 80 | 0.4 | 38 | 132 |

**Table 4: Mechanical performances of steel plates**

| | Yield strength MPa | Tensile strength MPa | Elongation % | Hole expansion ratio % | -40 °C impact energy J | Retained austenite content % |
|---|---|---|---|---|---|---|
| Ex. 1 | 809 | 1002 | 11.5 | 106.5 | 168 | 1.86 |
| Ex. 2 | 821 | 1034 | 12.5 | 90.9 | 170 | 2.49 |
| Ex. 3 | 806 | 1104 | 11.0 | 95.1 | 154 | 4.58 |
| Ex. 4 | 850 | 1011 | 10.5 | 82.8 | 144 | 2.64 |
| Ex. 5 | 819 | 1033 | 11.0 | 86.9 | 158 | 0.66 |
| Ex. 6 | 820 | 1032 | 12.0 | 87.2 | 182 | 4.33 |
| Ex. 7 | 883 | 1039 | 11.0 | 83.5 | 162 | 4.02 |
| Ex. 8 | 866 | 1050 | 10.5 | 100.7 | 180 | 3.56 |

| | | | | | | |
|---|---|---|---|---|---|---|
| Note: The impact energy is obtained by converting the measured impact energy of a sample having an actual thickness into the impact energy of a standard sample of 10*10*55 mm in proportion based on equivalent effect. | | | | | | |

## Claims

1. A 980 MPa-grade ultra-low-carbon martensitic-retained austenitic ultra-high-hole-expandability steel coil or plate, comprising the following chemical components in weight percentages: C 0.03%-0.06%, Si 0.8%-2.0%, Mn 1.0%-2.0%, P≤0.02%, S≤0.003%, Al 0.02-0.08%, N≤0.004%, Mo 0.1%-0.5%, Ti 0.01%-0.05%, O≤0.0030%, Cr≤0.5%, B≤0.002%, Ca≤0.005%, Nb≤0.06%, V≤0.05%, Cu≤0.5%, Ni≤0.5%, and a balance of Fe and other unavoidable impurities;
wherein the ultra-high-hole-expandability steel has a microstructure of martensite and retained austenite, wherein the proposition of the retained austenite is ≤5% by volume; and
wherein the ultra-high-hole-expandability steel has a yield strength of ≥800 MPa, a tensile strength of ≥980 MPa, a transverse A₅₀ of ≥10%, a hole expansion ratio of ≥80%, an impact toughness at -40°C of ≥140 J, and has passed cold bending test tested at d≤4a, 180°, and wherein the yield strength, tensile strength and elongation are tested in accordance with International Standard ISO6892-2-2018, the hole expansion ratio is tested in accordance with International Standard ISO16630-2017, the impact toughness at -40°C is tested in accordance with International Standard ISO14556-2015, and the bending performance is tested in accordance with International Standard ISO7438-2005.

2. The 980 MPa-grade ultra-low-carbon martensitic-retained austenitic ultra-high-hole-expandability steel coil or plate according to claim 1, comprising the following chemical components in weight percentages: C 0.03%-0.06%, Si 0.8%-2.0%, Mn 1.0%-2.0%, P≤0.02%, S≤0.003%, Al 0.02-0.08%, N≤0.004%, Mo 0.1%-0.5%, Ti 0.01%-0.05%, O≤0.0030%, Cr≤0.5%, B≤0.002%, Ca≤0.005%, Nb≤0.06%, V≤0.05%, Cu≤0.5%, Ni≤0.5%, and comprising at least one of Cr, B, Ca, Nb, V, Cu and Ni, preferably comprising at least Cr and/or B, and a balance of Fe and other unavoidable impurities.

3. The 980 MPa-grade ultra-low-carbon martensitic-retained austenitic ultra-high-hole-expandability steel coil or plate according to claim 1 or 2, wherein Cr has a content of 0.2-0.4%; Cu and Ni each have a content of ≤0.3%; Nb and V each have a content of ≤0.03%; B has a content of 0.0005-0.0015%; and Ca has a content of ≤0.002%.

4. The 980 MPa-grade ultra-low-carbon martensitic-retained austenitic ultra-high-hole-expandability steel coil or plate according to claim 1, wherein C: 0.04-0.055%.

5. The 980 MPa-grade ultra-low-carbon martensitic-retained austenitic ultra-high-hole-expandability steel coil or plate according to claim 1, wherein Si: 1.2-1.6%.

6. The 980 MPa-grade ultra-low-carbon martensitic-retained austenitic ultra-high-hole-expandability steel coil or plate according to claim 1, wherein Mn: 1.4-1.8%.

7. The 980 MPa-grade ultra-low-carbon martensitic-retained austenitic ultra-high-hole-expandability steel coil or plate according to claim 1, wherein S is controlled to have a content of 0.0015% or lower, and/or N is controlled to have a content of 0.003% or lower.

8. The 980 MPa-grade ultra-low-carbon martensitic-retained austenitic ultra-high-hole-expandability steel coil or plate according to claim 1, wherein Al: 0.02-0.05%.

9. The 980 MPa-grade ultra-low-carbon martensitic-retained austenitic ultra-high-hole-expandability steel coil or plate according to claim 1, wherein Ti: 0.01-0.03%, and/or Mo: 0.15-0.35%.

10. The 980 MPa-grade ultra-low-carbon martensitic-retained austenitic ultra-high-hole-expandability steel coil or plate according to claim 1, wherein the ultra-high-hole-expandability steel plate has a thickness of 2-6 mm.

11. The 980 MPa-grade ultra-low-carbon martensitic-retained austenitic ultra-high-hole-expandability steel coil or plate according to claim 1, wherein the ultra-high-hole-expandability steel has an impact toughness at -40°C of ≥150 J.

12. The 980 MPa-grade ultra-low-carbon martensitic-retained austenitic ultra-high-hole-expandability steel coil or plate according to claim 1, wherein the ultra-high-hole-expandability steel has a yield strength of ≥815 MPa, a tensile strength of ≥1000 MPa, a transverse A₅₀ of ≥10%, a hole expansion ratio of ≥85%, an impact toughness at -40°C of ≥ 150 J, and has passed cold bending test tested at d≤4a, 180°.

13. A method for manufacturing the 980 MPa-grade ultra-low-carbon martensitic-retained austenitic ultra-high-hole-expandability steel plate according to any one of claims 1-12, comprising the following steps:
1) Smelting, casting
wherein the components according to any one of claims 1-9 are subjected to smelting in a converter or electrical furnace, secondary refining in a vacuum furnace, and casting to form a cast blank or ingot;
2) Reheating of the cast blank or ingot, wherein a heating temperature is 1100-1200 °C; and a holding time is 1-2 hours;
3) Hot rolling
wherein an initial rolling temperature is 950-1100°C; wherein 3-5 passes of heavy reduction rolling is performed at a temperature of 950°C or higher with an accumulated deformation rate of ≥50%, preferably ≥60%, to obtain an intermediate blank; wherein the intermediate blank is held till 900-950°C, and then subjected to final 3-5 passes of rolling with an accumulated deformation rate of ≥70%, preferably ≥85%, wherein a final rolling temperature is 800-920°C;
4) Cooling
wherein air cooling is performed for 0-10 s first, and then the strip steel is water cooled at a cooling rate of ≥50°C/s, preferably 50-85°C/s, to a martensite start temperature Ms or a lower temperature, and then coiled and cooled to room temperature at a cooling rate of ≤20°C/h;
5) Pickling
wherein a moving speed of the strip steel is adjusted within a range of 30-100 m/min during pickling; a pickling temperature is controlled at 75-85°C, and a tension leveling rate is controlled at ≤2%; wherein the strip steel is then subjected to rinsing, surface drying, and oiling.

14. The method for manufacturing the 980 MPa-grade ultra-low-carbon martensitic-retained austenitic ultra-high hole-expandability steel plate according to claim 13, wherein in step 5), after the pickling, the rinsing is carried out at a temperature in a range of 35-50°C, and the surface of the strip steel is dried at 120-140°C, followed by oiling.

## Patentansprüche

1. Ein Stahlband oder eine Stahlplatte der 980-MPa-Klasse aus Martensit-Restaustenit mit extrem niedrigem Kohlenstoffgehalt und extrem hoher Lochdehnbarkeit, umfassend die folgenden chemischen Komponenten in Gewichtsprozent: C 0,03%-0,06%, Si 0,8%-2,0%, Mn 1,0%-2,0%, P ≤ 0,02%, S ≤ 0,003%, Al 0,02%-0,08%, N ≤ 0,004%, Mo 0,1%-0,5%, Ti 0,01%-0,05%, O ≤ 0,0030%, Cr ≤ 0,5%, B ≤ 0,002%, Ca ≤ 0,005%, Nb ≤ 0,06%, V ≤ 0,05%, Cu ≤ 0,5%, Ni ≤ 0,5% sowie Rest Fe und andere unvermeidbare Verunreinigungen;
wobei der Stahl mit extrem hoher Lochdehnbarkeit eine Mikrostruktur aus Martensit und Restaustenit aufweist, wobei der Anteil des Restaustenits ≤ 5 Vol.-% beträgt; und
wobei der Stahl mit extrem hoher Lochdehnbarkeit eine Streckgrenze von ≥ 800 MPa, eine Zugfestigkeit von ≥ 980 MPa, A₅₀ transversal ≥ 10%, ein Lochdehnungsfaktor von ≥ 80%, eine Schlagzähigkeit bei -40 °C von ≥ 140 J aufweist, und den Kaltbiegeversuch bei d ≤ 4a, 180° bestanden hat, und wobei die Streckgrenze, die Zugfestigkeit und die Dehnung gemäß der internationalen Norm ISO 6892-2-2018 geprüft werden, das Lochdehnungsfaktor gemäß der internationalen Norm ISO 16630-2017, die Schlagzähigkeit bei -40 °C gemäß der internationalen Norm ISO 14556-2015 und das Biegeverhalten gemäß der internationalen Norm ISO 7438-2005 geprüft werden.

2. Das Stahlband oder die Stahlplatte der 980-MPa-Klasse aus Martensit-Restaustenit mit extrem niedrigem Kohlenstoffgehalt und extrem hoher Lochdehnbarkeit nach Anspruch 1, umfassend die folgenden chemischen Komponenten in Gewichtsprozent: C 0,03%-0,06%, Si 0,8%-2,0%, Mn 1,0%-2,0%, P ≤ 0,02%, S ≤ 0,003%, Al 0,02%-0,08%, N ≤ 0,004%, Mo 0,1%-0,5%, Ti 0,01%-0,05%, O ≤ 0,0030%, Cr ≤ 0,5%, B ≤ 0,002%, Ca ≤ 0,005%, Nb ≤ 0,06%, V ≤ 0,05%, Cu ≤ 0,5%, Ni ≤ 0,5%, und mindestens eines der Elemente Cr, B, Ca, Nb, V, Cu und Ni, vorzugsweise mindestens Cr und/oder B, sowie den Rest aus Fe und anderen unvermeidbaren Verunreinigungen.

3. Das Stahlband oder die Stahlplatte der 980-MPa-Klasse aus Martensit-Restaustenit mit extrem niedrigem Kohlenstoffgehalt und extrem hoher Lochdehnbarkeit nach Anspruch 1 oder 2, wobei Cr einen Gehalt von 0,2-0,4% aufweist; Cu und Ni jeweils einen Gehalt von ≤ 0,3% aufweisen; Nb und V jeweils einen Gehalt von ≤ 0,03% aufweisen; B einen Gehalt von 0,0005-0,0015% aufweist; und Ca einen Gehalt von ≤ 0,002% aufweist.

4. Das Stahlband oder die Stahlplatte der 980-MPa-Klasse aus Martensit-Restaustenit mit extrem niedrigem Kohlenstoffgehalt und extrem hoher Lochdehnbarkeit nach Anspruch 1, wobei C: 0,04-0,055%.

5. Das Stahlband oder die Stahlplatte der 980-MPa-Klasse aus Martensit-Restaustenit mit extrem niedrigem Kohlenstoffgehalt und extrem hoher Lochdehnbarkeit nach Anspruch 1, wobei Si: 1,2-1,6%.

6. Das Stahlband oder die Stahlplatte der 980-MPa-Klasse aus Martensit-Restaustenit mit extrem niedrigem Kohlenstoffgehalt und extrem hoher Lochdehnbarkeit nach Anspruch 1, wobei Mn: 1,4-1,8%.

7. Das Stahlband oder die Stahlplatte der 980-MPa-Klasse aus Martensit-Restaustenit mit extrem niedrigem Kohlenstoffgehalt und extrem hoher Lochdehnbarkeit nach Anspruch 1, wobei der Gehalt an S auf 0,0015% oder weniger und/oder der Gehalt an N auf 0,003% oder weniger eingestellt ist.

8. Das Stahlband oder die Stahlplatte der 980-MPa-Klasse aus Martensit-Restaustenit mit extrem niedrigem Kohlenstoffgehalt und extrem hoher Lochdehnbarkeit nach Anspruch 1, wobei Al: 0,02-0,05%.

9. Das Stahlband oder die Stahlplatte der 980-MPa-Klasse aus Martensit-Restaustenit mit extrem niedrigem Kohlenstoffgehalt und extrem hoher Lochdehnbarkeit nach Anspruch 1, wobei Ti: 0,01-0,03% und/oder Mo: 0,15-0,35%.

10. Das Stahlband oder die Stahlplatte der 980-MPa-Klasse aus Martensit-Restaustenit mit extrem niedrigem Kohlenstoffgehalt und extrem hoher Lochdehnbarkeit nach Anspruch 1, wobei die Stahlplatte mit extrem hoher Lochdehnbarkeit eine Dicke von 2-6 mm aufweist.

11. Das Stahlband oder die Stahlplatte der 980-MPa-Klasse aus Martensit-Restaustenit mit extrem niedrigem Kohlenstoffgehalt und extrem hoher Lochdehnbarkeit nach Anspruch 1, wobei der Stahl mit extrem hoher Lochdehnbarkeit eine Schlagzähigkeit bei -40 °C von ≥ 150 J aufweist.

12. Das Stahlband oder die Stahlplatte der 980-MPa-Klasse aus Martensit-Restaustenit mit extrem niedrigem Kohlenstoffgehalt und extrem hoher Lochdehnbarkeit nach Anspruch 1, wobei der Stahl mit extrem hoher Lochdehnbarkeit eine Streckgrenze von ≥ 815 MPa, eine Zugfestigkeit von ≥ 1000 MPa, A₅₀ transversal ≥ 10%, ein Lochausdehnungsverhältnis von ≥ 85%, eine Schlagzähigkeit bei -40 °C von ≥ 150 J aufweist und den Kaltbiegeversuch bei d ≤ 4a, 180° bestanden hat.

13. Ein Verfahren zur Herstellung der Stahlplatte der 980-MPa-Klasse aus Martensit-Restaustenit mit extrem niedrigem Kohlenstoffgehalt und extrem hoher Lochdehnbarkeit nach einem der Ansprüche 1 bis 12, umfassend die folgenden Schritte:
1) Schmelzen, Gießen,
wobei die Komponenten nach einem der Ansprüche 1 bis 9 in einem Konverter oder Elektroofen geschmolzen, in einem Vakuumofen sekundär veredelt, und zu einem Gussrohling oder Barren gegossen werden;
2) Wiedererwärmen des Gussrohlings oder Barrens, wobei die Erwärmungstemperatur 1100-1200 °C beträgt und die Haltezeit 1-2 Stunden beträgt;
3) Warmwalzen,
wobei die anfängliche Walztemperatur 950-1100 °C beträgt; wobei 3-5 Durchgänge eines starken Reduktionswalzens bei einer Temperatur von 950 °C oder höher mit einer kumulativen Verformungsrate von ≥ 50%, vorzugsweise ≥ 60%, durchgeführt werden, um einen Zwischenrohling zu erhalten; wobei der Zwischenrohling auf 900-950 °C gehalten wird, und anschließend 3-5 Durchgängen des Endwalzens mit einer kumulativen Verformungsrate von ≥70%, vorzugsweise ≥85%, unterzogen wird, wobei die Endwalztemperatur 800-920 °C beträgt;
4) Abkühlen
wobei zunächst für 0-10 s eine Luftkühlung durchgeführt wird und anschließend der Bandstahl mit einer Abkühlgeschwindigkeit von ≥50 °C/s, vorzugsweise 50-85 °C/s, auf eine Martensit-Starttemperatur Ms oder eine niedrigere Temperatur wassergekühlt wird, um anschließend aufgewickelt und mit einer Abkühlgeschwindigkeit von ≤20 °C/h auf Raumtemperatur abgekühlt zu werden;
5) Beizen
wobei während des Beizens die Bewegungsgeschwindigkeit des Bandstahls in einem Bereich von 30-100 m/min eingestellt wird; die Beiztemperatur auf 75-85 °C geregelt wird, und die Spannungsrichtungsrate auf ≤ 2 % geregelt wird; wobei der Bandstahl anschließend gespült, oberflächentrocknet und geölt wird.

14. Das Verfahren zur Herstellung der Stahlplatte der 980-MPa-Klasse aus Martensit-Restaustenit mit extrem niedrigem Kohlenstoffgehalt und extrem hoher Lochdehnbarkeit nach Anspruch 13, wobei in Schritt 5), nach dem Beizen das Spülen bei einer Temperatur im Bereich von 35-50 °C durchgeführt wird, und die Oberfläche des Bandstahls bei 120-140 °C getrocknet wird, worauf eine Ölung folgt.

## Revendications

1. Une bobine ou tôle d'acier de classe 980 MPa, à très haute expansibilité des trous, de type martensite-austénite résiduelle et à très faible teneur en carbone, comprenant les composants chimiques suivants, exprimés en pourcentages massiques : C 0,03%-0,06%, Si 0,8%-2,0 %, Mn 1,0%-2,0%, P ≤ 0,02%, S ≤ 0,003%, Al 0,02-0,08%, N ≤ 0,004%, Mo 0,1%-0,5%, Ti 0,01%-0,05%, O ≤ 0,0030%, Cr ≤ 0,5%, B ≤ 0,002%, Ca ≤ 0,005%, Nb ≤ 0,06%, V ≤ 0,05%, Cu ≤ 0,5%, Ni ≤ 0,5%, le reste étant constitué de Fe et d'autres impuretés inévitables ;
dans laquelle l'acier à très haute expansibilité des trous présente une microstructure composée de martensite et d'austénite résiduelle, la proportion d'austénite résiduelle étant ≤ 5% en volume ; et
dans laquelle l'acier à très haute expansibilité des trous présente une limite d'élasticité ≥ 800 MPa, une résistance à la traction ≥ 980 MPa, un A₅₀ transversal ≥ 10%, un rapport d'expansion du trou ≥ 80%, une ténacité à la choc à -40 °C ≥ 140 J, et a satisfait à l'essai de cintrage à froid réalisé avec d ≤ 4a, à 180°, et dans laquelle la limite d'élasticité, la résistance à la traction et l'allongement sont déterminés conformément à la norme internationale ISO 6892-2-2018, le taux d'expansion du trou est testé conformément à la norme internationale ISO 16630-2017, la ténacité à l'impact à -40 °C est testée conformément à la norme internationale ISO 14556-2015, et les performances de flexion sont testées conformément à la norme internationale ISO 7438-2005.

2. La bobine ou tôle d'acier de classe 980 MPa, à très haute expansibilité des trous, de type martensite-austénite résiduelle et à très faible teneur en carbone, selon la revendication 1, comprenant les composants chimiques suivants, exprimés en pourcentages massiques : C 0,03%-0,06%, Si 0,8%-2,0%, Mn 1,0%-2,0%, P ≤ 0,02%, S ≤ 0,003%, Al 0,02%-0,08%, N ≤ 0,004%, Mo 0,1%-0,5%, Ti 0,01%-0,05%, O ≤ 0,0030%, Cr ≤ 0,5%, B ≤ 0,002%, Ca ≤ 0,005%, Nb ≤ 0,06%, V ≤ 0,05%, Cu ≤ 0,5%, Ni ≤ 0,5%, et comprenant au moins l'un des éléments Cr, B, Ca, Nb, V, Cu et Ni, de préférence comprenant au moins Cr et/ou B, le reste étant constitué de Fe et d'autres impuretés inévitables.

3. La bobine ou tôle d'acier de classe 980 MPa, à très haute expansibilité des trous, de type martensite-austénite résiduelle et à très faible teneur en carbone, selon la revendication 1 ou 2, dans laquelle la teneur en Cr est 0,2%-0,4% ; les teneurs en Cu et en Ni sont chacune ≤0,3% ; les teneurs en Nb et en V sont chacune ≤0,03% ; la teneur en B est 0,0005%-0,0015% ; et la teneur en Ca est ≤0,002%.

4. La bobine ou tôle d'acier de classe 980 MPa, à très haute expansibilité des trous, de type martensite-austénite résiduelle et à très faible teneur en carbone, selon la revendication 1, dans laquelle C : 0,04-0,055%.

5. La bobine ou tôle d'acier de classe 980 MPa, à très haute expansibilité des trous, de type martensite-austénite résiduelle et à très faible teneur en carbone, selon la revendication 1, dans laquelle Si : 1,2-1,6%.

6. La bobine ou tôle d'acier de classe 980 MPa, à très haute expansibilité des trous, de type martensite-austénite résiduelle et à très faible teneur en carbone, selon la revendication 1, dans laquelle Mn : 1,4-1,8%.

7. La bobine ou tôle d'acier de classe 980 MPa, à très haute expansibilité des trous, de type martensite-austénite résiduelle et à très faible teneur en carbone, selon la revendication 1, dans laquelle la teneur en S est contrôlée pour être égale ou inférieure à 0,0015%, et/ou la teneur en N est contrôlée pour être égale ou inférieure à 0,003%.

8. La bobine ou tôle d'acier de classe 980 MPa, à très haute expansibilité des trous, de type martensite-austénite résiduelle et à très faible teneur en carbone, selon la revendication 1, dans laquelle Al : 0,02-0,05%.

9. La bobine ou tôle d'acier de classe 980 MPa, à très haute expansibilité des trous, de type martensite-austénite résiduelle et à très faible teneur en carbone, selon la revendication 1, dans laquelle : Ti : 0,01-0,03%, et/ou Mo : 0,15-0,35%.

10. La bobine ou tôle d'acier de classe 980 MPa, à très haute expansibilité des trous, de type martensite-austénite résiduelle et à très faible teneur en carbone, selon la revendication 1, dans laquelle la tôle d'acier à très haute capacité d'expansion des trous présente une épaisseur de 2-6 mm.

11. La bobine ou tôle d'acier de classe 980 MPa, à très haute expansibilité des trous, de type martensite-austénite résiduelle et à très faible teneur en carbone, selon la revendication 1, dans laquelle l'acier à très haute expansibilité des trous présente une ténacité à l'impact à -40 °C de ≥ 150 J.

12. La bobine ou tôle d'acier de classe 980 MPa, à très haute expansibilité des trous, de type martensite-austénite résiduelle et à très faible teneur en carbone, selon la revendication 1, dans laquelle l'acier à très haute capacité d'expansion des trous présente une limite d'élasticité ≥ 815 MPa, une résistance à la traction ≥ 1 000 MPa, un A₅₀ transversal ≥ 10%, un taux d'expansion des trous ≥ 85%, une ténacité à l'impact à -40 °C de ≥ 150 J, et a satisfait à l'essai de cintrage à froid réalisé à d ≤ 4a, 180°.

13. Un procédé de fabrication d'une tôle d'acier de classe 980 MPa, à très haute expansibilité des trous, de type martensite-austénite résiduelle et à très faible teneur en carbone, selon l'une quelconque des revendications 1 à 12, comprenant les étapes suivantes :
1) Fusion, coulée
dans lequel les composants selon l'une quelconque des revendications 1 à 9 sont soumis à une fusion dans un convertisseur ou un four électrique, à un affinage secondaire dans un four sous vide, puis à une coulée pour former une ébauche coulée ou un lingot ;
2) Réchauffage de l'ébauche coulée ou du lingot, la température de chauffage étant 1100-1200 °C et la durée de maintien étant 1-2 heures ;
3) Laminage à chaud
dans lequel la température initiale de laminage est 950-1100 °C ; dans lequel 3 à 5 passes de laminage à forte réduction sont effectuées à une température de 950 °C ou plus, avec un taux de déformation cumulé ≥ 50%, de préférence ≥ 60%, afin d'obtenir une ébauche intermédiaire ; dans lequel l'ébauche intermédiaire est maintenue à une température 900-950 °C, puis soumise à 3 à 5 passes finales de laminage avec un taux de déformation cumulé ≥ 70%, de préférence ≥ 85%, la température de laminage finale étant 800-920 °C ;
4) Refroidissement
dans lequel un refroidissement à l'air est d'abord effectué pendant 0-10 s, puis la bande d'acier est refroidie à l'eau à une vitesse de refroidissement de ≥ 50 °C/s, de préférence 50-85 °C/s, jusqu'à la température de début de martensite Ms ou à une température inférieure, puis enroulée et refroidie à température ambiante à une vitesse de refroidissement de ≤ 20 °C/h ;
5) Décapage
dans lequel la vitesse de déplacement de la bande d'acier est réglée dans une plage de 30 à 100 m/min pendant le décapage ; la température de décapage est maintenue 75-85 °C, et le taux de planage sous tension est maintenu à ≤ 2% ; la bande d'acier est ensuite soumise à un rinçage, un séchage de surface et une lubrification.

14. Le procédé de fabrication de la tôle d'acier de classe 980 MPa, à très haute expansibilité des trous, de type martensite-austénite résiduelle et à très faible teneur en carbone, selon la revendication 13, dans lequel, à l'étape 5), après le décapage, le rinçage est effectué à une température dans une plage de 35-50 °C, et la surface de la bande d'acier est séchée à une température de 120-140 °C, puis huilée.
